Europäisches Patentamt

European Patent Office

Office européen des brevets

(11) Veröffentlichungsnummer: **0 166 857**

**A2**

(12) **EUROPÄISCHE PATENTANMELDUNG**

(21) Anmeldenummer: **85102153.5**

(22) Anmeldetag: **27.02.85**

(51) Int. Cl.⁴: **E 02 D 19/18**
E 02 B 3/16, E 02 D 31/04
//B09B1/00, E02D5/20

(30) Priorität: **06.07.84 DE 3424821**

(43) Veröffentlichungstag der Anmeldung:
**08.01.86 Patentblatt 86/2**

(84) Benannte Vertragsstaaten:
**AT BE CH DE FR GB IT LI NL SE**

(71) Anmelder: **Niederberg-Chemie GmbH**
**Postfach 11 63**
**D-4133 Neukirchen-Vluyn(DE)**

(72) Erfinder: **Schlütter, Aloys**
**Rheinstrasse 42**
**D-4152 Kempen 3(DE)**

(72) Erfinder: **Kopp, Bernd**
**Acignéring 11**
**D-4175 Wachtendonk(DE)**

(54) **Erdschlitze.**

(57) Nach der Erfindung werden Abdichtungsbahnen, die sich aus Einzelteilen zusammensetzen und zum Absenken in mit thixotroper Masse gefüllte Erdschlitze bestimmt sind, an den Stoßstellen der Einzelteile überlappt und mittels eines Sackes dichtend aneinander gepreßt, der nach Einbringen der Dichtungsbahn gefüllt wird.

EP 0 166 857 A2

## Erdschlitze

Die Erfindung betrifft Erdschlitze mit einer eingefüllten thixotropen Masse, in die eine Dichtungbahn abgesinkt wird, die sich aus Einzelteilen zusammensetzt.

Derartige Erdschlitze bilden Schlitzwände. Als thixotrope Masse kann z. B. Bentonitschlempe dienen. Das ist eine Tonart. Die thixotrope Masse hat die Aufgabe, die Seitenwände des Erdschlitzes stabil zu halten. Anschließend können Betonplatten aus wasserdichtem Beton eingebracht oder die Bentonitschlempe mit einem geeigneten Beton so aufgefüllt werden, daß die Schlitzwand in sich wasserdicht bleibt und den Durchtritt angrenzender Flüssigkeiten verhindert. Das Einbringen von Betonplatten bzw. geeignetem Beton wird durch das besondere Verhalten thixotroper Massen erleichtert. Thixotrope Massen bilden in der Ruhelage ein relativ festes Gebilde. D. h. nach Einbringen der Bentonitschlempe erstarrt diese praktisch in den Erdschlitzen. Durch Anstoßen der Bentonitschlempe kann diese wie jede andere thixotrope Masse jedoch wieder fließfähig gemacht werden. Diese Eigenschaft wird beim Einbringen der Betonplatten bzw. geeigneten anderen Betons genutzt. Die Betonplatten sinken dann in der fließfähig werdenden Bentonitschlempe leicht nach unten.

Je nach Bauvorhaben ergeben sich die unterschiedlichsten Anforderungen an die Breite der Schlitzwände. In einfachsten Fällen sind die Schlitzwände 15 - 20 cm breit. Es sind jedoch auch Schlitzwände mit einer Dicke von 50 cm und mehr in der Anwendung. Zur Verringerung der Breite der Erdschlitze ist nach einem älteren Vorschlag vorgesehen, in die thixotrope Masse eine Dichtungsbahn abzusenken. Mit dem Vorteil einfacher Produktionstechnik sollen sich die Dichtungsbahnen aus Einzelteilen zusammensetzen. Dazu sind Einzelelemente mit z. B. 10 m Länge vorgesehen.

- 3 -

0166857

Die Dichtungsbahnen können aus PVC-Weichfolie, aber auch aus Ethylen-Copolymerisaten (CARBOFOL) oder Polyethylen-Folien bestehen.

Die Montage der Bahn erfolgt nach dem älteren Vorschlag mittels Verbindungselementen. An jedem Stoß die gesamten Dichtungsbahn bildenden Einzelteile ist für jedes Folienende ein Verbindungselement so vorgesehen, daß an dem Stoß das eine Verbindungselement das andere umfaßt.

Die vorliegende Erfindung geht einen anderen Weg. An den Stoßstellen der Einzelteile ist eine Überlappung vorgesehen. Ferner befindet sich an der Überlappungstelle ein Sack, der die überlappenden Enden gegeneinander drückt, wenn er gefüllt ist.

Im Einzelnen ist an jedem Stoß eine Überlappung von 1 bis 2 m für die Einzelteile der Dichtungsbahn vorgesehen. Der Sack befindet sich nur an einem Ende eines Einzelteiles. Bei der Montage wird dieses Ende mit dem Sack am Stoß so angeordnet, daß das korrespondiererde überlappende Ende des anderen Einzelteiles außen liegt. In dieser Anordnung werden die zu einer Dichtungsbahn zusammengesetzen Einzelteile in den mit Bentonit gefüllten Erdschlitz abgesenkt. Im abgesenken Zustand wird der vorzugsweise als Gewebesack ausgebildete Sack mit Beton oder Bentonit höherer Dichte, also höherem spezifischen Gewicht, gefüllt. Zum einen bewirkt das Höhere des Sackes, daß das an der entsprechenden Verbindungsstelle innen liegende Ende, gegen das außen liegende Stoßende gedrückt wird und so eine Abdichtung bewirkt. Zum anderen verschließt der Sack bei entsprechender Auslegung den Erdschlitz und dichtet so in Längsrichtung zusätzlich den Schlitz ab.

Die erfindungsgemäßen Dichtungsbahnelemente sind wesentlich dünner als vergleichbare Betonplatten. Im Ergebnis ermöglichen die erfindungsgemäßen Dichtungsbahnelemente eine Verringerung der Schlitzwanddicke gegenüber Schlitzwänden mit Betonplatten auf die Hälfte.

- 4 -

Eine besonders vorteilhafte Anwendung der erfindungsgemäßen Schlitzwände ist die Abdichtung von Deponien, flüssigkeitsführenden und flüssigkeitshaltenden Systemen. Bei Deponien stellt sich häufig das Problem, das Eindringen von Giftstoffen aus der Deponie in das Grundwasser zu verhindern. In solchen Fällen werden um die Deponie herum bzw. an gefahrbringenden Seiten Erdschlitze mit einer Tiefe bis zu einem sicheren Untergrund ausgehoben. In die Erdschlitze werden nach Einfüllen von Bentonitschlempe die erfindungsgemäßen Dichtungsbahnelemente eingebracht. Dieses Verfahren läßt sich auch anwenden auf flüssigkeitsführende Systeme wie Flußläufe und dergleichen. Hier kann mit Hilfe der erfindungsgemäßen Erdschlitze das Flußwasser in seinem Bett gehalten werden. Das ist insbesondere in Trockenzonen und im Kanalbau von Vorteil.

Andere flüssigkeitshaltende Systeme sind z. B. Teiche oder Seen oder Dämme, wobei die zurückhaltende Flüssigkeit auch eine andere als Wasser sein kann.

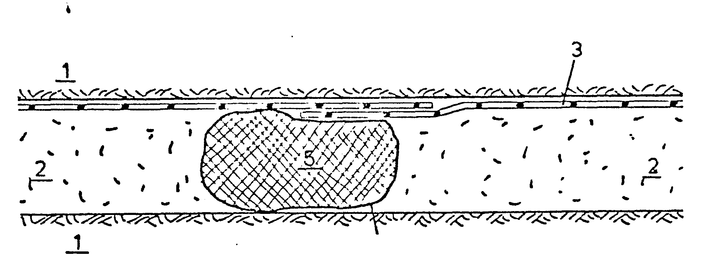

In der Zeichnung ist ein Ausführungsbeispiel der Erfindung dargestellt.

Mit 1 ist das Erdreich bezeichnet. Im Erdreich ist ein Schlitz 2. Der Schlitz 2 entsteht mit Hilfe eines Löffelbaggers oder einer Fräse oder dergleichen Werkzeugen. Zur Abdichtung eines wasserhaltenden Teiches reicht der Schlitz bis auf eine wasserundurchlässige Lehmschicht. Nach Ausheben des Schlitzes wird zunächst Bentonit in den Erdschlitz gefüllt. Anschließend wird eine Dichtungsbahn (3) in die Bentonitmasse abgesenkt. Dazu wird die Dichtungsbahn (3) zunächst in die aus der Zeichnung ersichtliche Position gebracht und an der Unterseite mit einem Stahlprofil beschwert. Das Stahlprofil dient als Gewicht und zugleich als Sicherung für ein einwandfreies Eindringen der Dichtungsbahn in die Bentonitschicht.

Mit der Dichtungsbahn wird zugleich ein Gewebesack (5) in die Bentonitmasse abgesenkt. Im abgesenkten Zustand kann der Gewebesack (5) von
oben  mit Beton oder einer Bentonitmasse größeren spezifischen Gewichtes
gefüllt werden. Die eingefüllte Masse wölbt den Gewebesack (5) auf, so
daß dieser an der Überlappungsstelle der Einzelteile der Abdichtungsbahn
die überlappenden Enden gegeneinander drückt und so eine Abdichtung
bewirkt.

Patentansprüche

1. Erdschlitze mit einer eingefüllten thixotropen Masse, in die eine Dichtungsbahn abgesenkt wird, die aus Einzelteilen zusammengesetzt ist, dadurch gekennzeichnet, daß die Einzelteile (3) sich überlappen und an den Oberlappungsstellen ein Sack (5) vorgesehen ist, der die sich überlappenden Enden der Einzelteile im gefüllten Zustand gegeneinander drückt.

2. Erdschlitze nach Anspruch 1, dadurch gekennzeichnet, daß der Sack (5) ein Gewebesack ist.

3. Erdschlitze nach Anspruch 1 oder 2, dadurch gekennzeichnet, daß die Einzelteile (3) sich 1 bis 2 m überlappen und die Länge der Einzelteile bis zu 10 m beträgt.

4. Erdschlitze nach einem oder mehreren der Ansprüche 1 bis 3, gekennzeichnet durch eine Betonfüllung oder Bentonitfüllung mit höherem spezifischem Gewicht für den Sack (5).

5. Erdschlitze nach einem oder mehreren der Ansprüche 1 bis 4, gekennzeichnet durch Gewichte zum Absenken der Dichtungsbahn.

6. Erdschlitze nach Anspruch 5, dadurch gekennzeichnet, das Gewichte aus Stahlprofil bestehen, die an der Unterseite der Einzelteile (3) befestigt sind.

1/1

0166857